# EUROPÄISCHE PATENTSCHRIFT

(11) **EP 1 736 384 B1**
(45) Veröffentlichungstag und Bekanntmachung des Hinweises auf die Patenterteilung: **12.08.2009**
(21) Anmeldenummer: 06011923.7
(22) Anmeldetag: 09.06.2006
(51) Int. Cl.: B60S 1/02, G01S 13/93, H05B 3/84

(54) **Vorrichtung und Verfahren zum Betreiben einer Sensoranordnung in einem Kraftfahrzeug**
Device and method to control a sensor arrangement in a vehicle
Dispositif et méthode pour contrôler un dispositif de détection dans un véhicule

(30) Priorität: 24.06.2005 DE 102005029411
(43) Veröffentlichungstag der Anmeldung: 27.12.2006
(73) Patentinhaber: AUDI AG, 85045 Ingolstadt (DE)
(72) Erfinder: Holzmann, Manfred, 91171 Greding (DE)
(74) Vertreter: Thielmann, Frank

(56) Entgegenhaltungen:
- EP-A- 0 934 851
- DE-A1- 10 127 684
- DE-A1- 10 322 010
- DE-A1- 10 340 900
- DE-A1- 19 644 164
- JP-A- 8 029 535

## Beschreibung

Die Erfindung betrifft eine Vorrichtung sowie ein Verfahren zum Betreiben einer Sensoranordnung, welche in einem Kraftfahrzeug angeordnet ist. Die Sensoranordnung ist mit einer Abdeckung zumindest teilweise abgedeckt, wobei die Abdeckung zumindest teildurchlässig für die von der Sensoranordnung empfangbaren Signale ausgebildet ist. Darüber hinaus umfasst die Vorrichtung auch eine Heizeinrichtung zum Heizen der Abdeckung.

Aus der EP 0 934 851 A2 ist eine optische Sensorvorrichtung für ein Kraftfahrzeug bekannt, welche zur Aufnahme von Bildinformationen aus der Umgebung des Kraftfahrzeugs ausgebildet ist. Die Sensorvorrichtung ist hinter der Windschutzscheibe angeordnet. In die Scheibe kann eine elektrische Scheiben-Zusatzbeheizung angeordnet sein. Die Beheizung kann in Abhängigkeit von Signalen einer Steuervorrichtung erfolgen, welche darüber hinaus zur Auswertung der Sensorsignale ausgebildet ist.

Aus der DE 101 27 684 A1 ist ein Regensensor mit mindestens einem Heizelement sowie ein Verfahren zum Heizen eines Regensensors bekannt. Heizelemente sind im Bereich eines Lichtleitkörpers nahe der Scheibe, hinter der der Regensensor angeordnet ist, angeordnet. Die Ansteuerung der Heizelemente erfolgt durch eine Steuereinrichtung, wobei die Ansteuerung abhängig von einem im Inneren angeordneten Temperaturfühler, welcher die Innentemperatur misst, erfolgen kann. Darüber hinaus kann die Heizleistung auch abhängig von einer Außentemperatur erfolgen.

Aus der DE 103 22 010 A1 ist ein Bilderkennungssystem zum Erfassen einer Niederschlagsmenge auf einer Scheibe des Kraftfahrzeugs bekannt. Die Kamera kann darüber hinaus zur Umgebungserkennung eingesetzt werden.

Des Weiteren ist aus der DE 103 40 900 A1 ist ein Kameramodul mit heizbarer Abdeckscheibe bekannt. Die Widerstandsheizung kann in Abhängigkeit der Ausgangssignale eines Regensensors gesteuert werden.

Aus der WO 2004/068164 A2 ist ein Gefahrenerkennungssystem für Kraftfahrzeuge mit mindestens einer seitlichen und rückwärtigen Umgebungserfassung bekannt. Das Gefahrenerkennungssystem umfasst Sensoren, welche als digitale Kameras, Entfernungsbildkameras oder Laser- oder Radarsysteme ausgebildet sein können. Zum Schutz der Sensoren, welche beispielsweise in einem Seitenspiegel des Kraftfahrzeugs angeordnet sein können, kann eine elektromechanisch betätigbare Verschließvorrichtung versehen sein, welche beim Stillstand des Kraftfahrzeugs verschlossen wird. Das Gefahrenerkennungssystem kann im üblichen Temperaturbereich eingesetzt werden. Um den Einfluss extrem hoher oder extrem tiefer Temperaturen zu vermindern, kann das Gefahrenerkennungssystem auch eine Heizung umfassen.

Des Weiteren ist aus der deutschen Offenlegungsschrift DE 199 56 089 A1 eine Sensoranordnung mit einem Empfänger zum Empfangen von Signalen, die durch eine Sensoraußenfläche, welche an der Außenseite des Kraftfahrzeugs angeordnet ist, vollständig hindurchtreten können, bekannt. An oder in der Sensoraußenfläche ist eine Heizeinrichtung angeordnet, die mit einer Steuereinrichtung verbunden ist, welche in Abhängigkeit von Eingangssignalen die Heizeinrichtung aktiviert. Diese Eingangssignale können beispielsweise ein Temperatursignal oder ein Geschwindigkeitssignal des Kraftfahrzeugs sein. Des Weiteren kann ein derartiges Eingangssignal auch einen Verschmutzungsgrad der Sensorfläche charakterisieren. Ein wesentlicher Nachteil dieser bekannten Sensoranordnung ist darin zu sehen, dass die Heizung der Sensoraußenfläche relativ uneffektiv und uneffizient dahingehend durchgeführt wird, dass die Heizvorgänge im Hinblick auf ihre tatsächliche Erforderlichkeit relativ unzureichend durchgeführt werden. Dies führt dazu, dass bei übermäßigem Heizen oder bei einem nicht erforderlichen Heizen die Sensorsaußenfläche relativ stark verschmutzt wird, da der auf der Sensoraußenfläche befindliche Schmutz quasi getrocknet wird und auf der Sensoraußenfläche haften bleibt bzw. dort verkrustet. Dies führt dazu, dass die Funktionsweise der Sensoranordnung erheblich beeinträchtigt wird. Nicht zuletzt wird dadurch auch das "Design" aufgrund des unterschiedlichen Verschmutzungsgrades von Heizfläche und umgebender Fahrzeugoberfläche schlecht dargestellt. Es ist somit erforderlich, eine Vorrichtung bereitzustellen, welche nicht nur bei pauschal festgelegten Eingangssignalen, wie beispielsweise "Zündung ein" oder einer Außentemperatur oder einer Fahrzeuggeschwindigkeit oder erst gar bei einer bereits erkannten Verschmutzung der Sensoraußenfläche heizt, sondern ein derartiger Heizvorgang in optimierter Weise situationsabhängig durchgeführt wird.

Insbesondere bei winterähnlichen oder winterlichen Umgebungsbedingungen wird durch ein Heizen der Sensoraußenfläche erreicht, dass der sich anlagernde Schnee oder Schneematsch auflöst. Allerdings verschmutzt diese Sensoraußenfläche wesentlich stärker als die restlichen beheizten Karosserieteile, z. B. restliche Stoßfängerbereiche, da ständig Matsch und Wasser, das sich bei der Fahrt von der Straße auf die Sensoraußenfläche ablagert, durch das unzureichend optimierte Heizen verdunstet und der enthaltene Schmutz sowie Salz an dieser Sensoraußenfläche angesammelt wird.

Daher ist es Aufgabe der vorliegenden Erfindung, eine Vorrichtung sowie ein Verfahren zum Betreiben einer Sensoranordnung in einem Kraftfahrzeug zu schaffen, welche bzw. welches eine Verminderung der Verschmutzung der Sensoranordnung gewährleisten kann. Insbesondere ist es auch Aufgabe der Erfindung, das situationsabhängige Betreiben der Heizeinrichtung zu optimieren.

Diese Aufgabe wird durch eine Vorrichtung, welche die Merkmale nach Patentanspruch 1 aufweist, und ein Verfahren, welches die Merkmale nach Patentanspruch 8 aufweist, gelöst.

Eine erfindungsgemäße Vorrichtung zum Betreiben einer Sensoranordnung umfasst zumindest einen Sensor und ist in einem Kraftfahrzeug angeordnet. Die Sensoranordnung ist mit einer Abdeckung zumindest teilweise bedeckt, wobei die Abdeckung zumindest teildurchlässig für die von der Sensoranordnung empfangbaren Signale ist. Darüber hinaus umfasst die erfindungsgemäße Vorrichtung auch eine Heizeinrichtung zum Heizen der Abdeckung. Ein wesentlicher Gedanke der Erfindung besteht darin, dass die Vorrichtung eine bildverarbeitende Einheit aufweist, welche zur bildhaften Detektion von Umgebungsbedingungen der Sensoranordnung und/oder des Kraftfahrzeugs ausgebildet ist, wobei die Heizeinrichtung abhängig von den detektierbaren Umgebungsbedingungen der bildverarbeitenden Einheit zum Heizen der Abdeckung aktivierbar ist. Durch die erfindungsgemäße Vorrichtung kann somit erreicht werden, dass die Heizeinrichtung in optimaler Weise betrieben werden kann und somit ein effektives und effizientes Heizen der Abdeckung der Sensoranordnung dahingehend erreicht werden kann, dass ein Verschmutzen der Abdeckung durch übermäßiges und nicht erforderliches Heizen verhindert oder zumindest vermindert werden kann. Durch die Erfindung kann somit gewährleistet werden, dass sowohl eine Verschmutzung der Abdeckung verhindert oder zumindest vermindert werden kann, welche durch Umgebungsbedingungen bzw. Witterungsbedingungen der Sensoranordnung eintreten können. Darüber hinaus kann durch die Erfindung auch erreicht werden, dass eine Verschmutzung der Abdeckung verhindert oder zumindest vermindert werden kann, welche durch ein unnötiges Heizen der Abdeckung hervorgerufen wird. Insbesondere kann diesbezüglich verhindert werden, dass durch den Heizvorgang selbst eine Verschmutzung oder eine übermäßige Verschmutzung der Abdeckung hervorgerufen wird, welche zu einer Beeinträchtigung der Funktionsweise der Sensoranordnung und zur Designbeeinträchtigung führt.

Es ist vorgesehen, dass die Heizeinrichtung zum Heizen der Abdeckung dann aktivierbar ist, wenn eine weitere Komponente des Kraftfahrzeugs aktiviert ist. Diesbezüglich ist vorgesehen, dass die Heizeinrichtung zum Heizen der Abdeckung dann aktivierbar ist, wenn eine Scheibenwischervorrichtung des Kraftfahrzeugs aktiv ist. Auch dadurch wird ein weiteres redundantes Kriterium geschaffen, welches erfüllt sein muss, um ein Betreiben der Heizeinrichtung durchführen zu können. Auch dadurch kann der Einsatz der Heizeinrichtung optimiert werden.

In vorteilhafter Weise ist die Heizeinrichtung dann zum Heizen der Abdeckung aktivierbar, wenn die detektierbaren Umgebungsbedingungen vorgebbare Soll-Umgebungsbedingungen erreichen. Dies ermöglicht eine exakte und optimierbare Einstellung der Heizeinrichtung, wodurch gewährleistet wird, dass die Heizeinrichtung auch nur dann betrieben wird, wenn es erforderlich ist und auch gewährleistet werden kann, dass keinerlei beziehungsweise höchstens geringe Verschmutzung der Abdeckung durch den Heizvorgang selbst erzeugt wird.

Die bildverarbeitende Einheit ist in bevorzugter Weise zur bildhaften Detektion von winterlichen oder winterähnlichen Umgebungsbedingungen, insbesondere von Schneefall oder Schneematsch, ausgebildet. Gerade derartige Umgebungsbedingungen sind für den Betrieb der Sensoranordnung besonders kritisch, wobei sich durch die Erfindung gerade bei derartigen Wettereinflüssen und daraus resultierenden Umgebungsbedingungen ein deutlich verbesserter Betrieb der Sensoranordnung und eine wesentlich verbesserte Zuverlässigkeit erreichen lässt. Anzumerken ist, dass ein aktivierter Scheibenwischer kein Kriterium für eine Situation "Schneefall" ist, da sich die Schneeflocken aufgrund des Fahrtwindes normalerweise nicht oder nur geringfügig auf der Windschutzscheibe anlagern.

In vorteilhafter Weise ist die Heizeinrichtung zum Heizen der Abdeckung dann aktivierbar, wenn zusätzlich eine detektierbare Umgebungstemperatur innerhalb eines vorgebbaren Temperaturintervalls liegt. Es wird dadurch erreicht, dass eine Heizeinrichtung nur dann aktivierbar ist, wenn zumindest zwei Kriterien erfüllt sind, diesbezüglich ist es somit erforderlich, dass einerseits eine bildhafte Detektion der Umgebungsbedingungen durchgeführt wird und zusätzlich über eine weitere Einheit, insbesondere einen Temperatursensor, eine Außentemperatur im Bereich der Abdeckung ermittelbar ist. Durch eine derartige redundante Ausbildung von Kriterien, welche erfüllt sein müssen, damit die Heizeinrichtung aktivierbar ist, kann nochmals eine Verbesserung für den effizienten und effektiven Betrieb der Heizeinrichtung ermöglicht werden. Der Verschmutzungsgrad der Abdeckung kann dadurch deutlich reduziert werden, womit die Betreibung der Sensoranordnung wesentlich sicherer und zuverlässiger durchgeführt werden kann.

Die Sensoranordnung bzw. der zumindest eine Sensor kann zum Empfangen von Radarsignalen und/oder Infrarotsignalen und/oder Ultraschallsignalen ausgebildet sein. Die Sensoranordnung oder der zumindest eine Sensor ist somit in vorteilhafter Weise als Radarsensor oder Infrarotsensor oder Ultraschallsensor ausgebildet. Die Heizeinrichtung kann als in die Abdeckung integrierte Heizdrähte oder als auf die Abdeckung aufgebrachte Heizleiter oder als eine auf die Abdeckung aufgebrachte Heizfolie ausgebildet sein. Die Sensoranordnung ist in vorteilhafter Weise einem Gefahrenerkennungssystem oder einem Hilfesystem des Kraftfahrzeugs zugeordnet. Die Sensoranordnung oder zumindest der eine Sensor sind in bevorzugter Weise an einer Außenseite des Kraftfahrzeugs angeordnet, wobei insbesondere der Sensor und die zumindest die Sensoranordnung teilweise abdeckende Abdeckung dieser Außenseite des Kraftfahrzeugs zugewandt sind. Gefahrenerkennungssysteme können beispielsweise Systeme zum Erkennen von Fahrzeugen, Personen oder anderen Elementen in einem Totwinkelbereich des Kraftfahrzeugs sein. Darüber hinaus können beispielsweise auch sogenannte Unfallvorerkennungssysteme oder Abstandsregelsysteme als Gefahrenerkennungssysteme bezeichnet werden. Als Hilfssysteme können beispielsweise Einparkhilfen oder andere Fahrerassistenzsysteme betrachtet werden.

Bei einem erfindungsgemäßen Verfahren zum Betreiben einer Sensoranordnung mit zumindest einem Sensor, welche in einem Kraftfahrzeug angeordnet ist, wird die Sensoranordnung zumindest teilweise durch eine Abdeckung abgedeckt. Die Abdeckung ist zumindest teildurchlässig für die von der Sensoranordnung empfangbaren Signale ausgebildet. Die Abdeckung wird mittels einer Heizeinrichtung geheizt. Ein wesentlicher Gedanke der Erfindung besteht darin, dass Umgebungsbedingungen der Sensoranordnung mittels einer bildverarbeitenden Einheit bildhaft detektiert werden und die Heizeinrichtung abhängig von den detektierbaren Umgebungsbedingungen der bildverarbeitenden Einheit zum Heizen der Abdeckung aktiviert wird. Dadurch wird ein zuverlässiges und sicheres Betreiben der Sensoranordnung ermöglicht. Durch die optimierte situationsabhängige und bedarfsmäßige Aktivierung und Deaktivierung der Heizeinrichtung kann die Verschmutzung der Abdeckung deutlich reduziert werden. Insbesondere kann dadurch erreicht werden, dass die durch den Heizvorgang erzeugte Verschmutzung der Abdeckung verhindert oder vermindert wird.

Vorteilhafte Ausgestaltungen der erfindungsgemäßen Vorrichtung sind, soweit übertragbar, auch als vorteilhafte Ausgestaltungen des erfindungsgemäßen Verfahrens anzusehen.

Ein Ausführungsbeispiel der Erfindung wird nachfolgend anhand einer schematischen Zeichnung näher erläutert. Die einzige Figur zeigt eine Blockschaltbilddarstellung einer erfindungsgemäßen Vorrichtung.

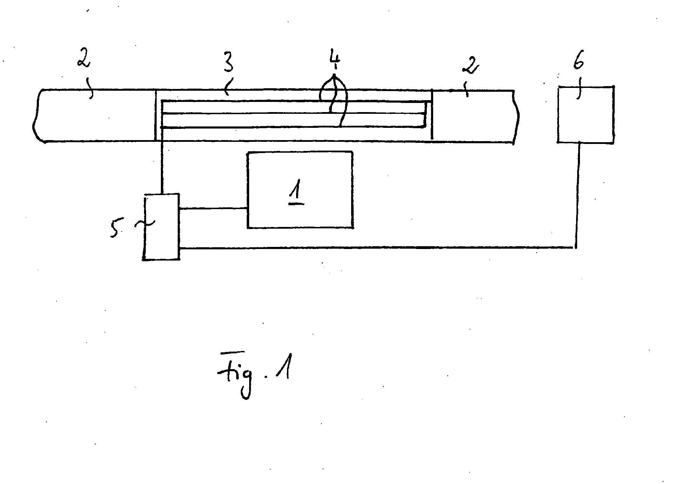

Wie in der Darstellung gemäß Fig. 1 gezeigt, weist die erfindungsgemäße Vorrichtung zumindest einen Sensor 1 auf, welcher im Ausführungsbeispiel als Radarsensor ausgebildet ist. Die den Sensor 1 umfassende Sensoranordnung ist im Ausführungsbeispiel in einem ACC (Adaptive Cruise Control) - System angeordnet bzw. diesem zugeordnet und im Bereich eines Stoßfängers 2 des Kraftfahrzeugs angeordnet. Der Sensor 1 ist zur Außenseite des Kraftfahrzeugs hin bzw. der der Kraftfahrzeugumgebung zugewandten Seite durch eine Abdeckung 3 abgedeckt. Wie in Fig. 1 zu erkennen ist, ist diese Abdeckung 3, welche im Ausführungsbeispiel als Kunststoffabdeckung ausgebildet ist, in dem Stoßfänger 2 angeordnet.

Die erfindungsgemäße Vorrichtung weist eine Heizeinrichtung auf, welche im Ausführungsbeispiel durch Heizdrähte 4 ausgebildet ist, wobei diese Heizdrähte 4 in die Abdeckung 3 eingespritzt sind. Die die Heizeinrichtung bildenden Heizdrähte 4 sind mit einer Steuereinheit 5 elektrisch verbunden. Darüber hinaus weist auch der Sensor 1 eine elektrische Verbindung zu dieser Steuereinheit 5 auf.

Des Weiteren umfasst die erfindungsgemäße Vorrichtung eine bildverarbeitende Einheit, welche im Ausführungsbeispiel als Kamera 6 ausgebildet ist und eine elektrische Verbindung zur Steuereinheit 5 aufweist.

Die Abdeckung 3 ist im Ausführungsbeispiel zumindest teildurchlässig für Radarsignale ausgebildet.

Die Kamera 6 kann im Wesentlichen an beliebiger Position des Kraftfahrzeugs ausgebildet sein. In vorteilhafter Weise ist die Kamera 6 jedoch derart angeordnet, dass sie im Bereich der Abdeckung 3 positioniert ist. Es kann beispielsweise vorgesehen sein, dass die Kamera 6 im Randbereich der Abdeckung 3 oder aber auch in dem Stoßfänger 2 benachbart zur Abdeckung 3 angeordnet ist. Ebenso kann jedoch auch vorgesehen sein, dass die Kamera 6 im Bereich einer Frontscheibe oder im Bereich der Scheinwerfer positioniert ist. Es kann jedoch auch vorgesehen sein, dass diese Kamera 6 im Heckbereich des Kraftfahrzeugs angeordnet ist. Die Kamera 6 kann eine derartige bildverarbeitende Einheit sein, welche explizit nur zur bildhaften Detektion der Umgebungsbedingungen für die erfindungsgemäße Vorrichtung ausgebildet ist. Es kann jedoch auch vorgesehen sein, dass diese Kamera 6 eine bildhafte Detektion der Umgebungsbedingungen durchführt, wobei diese dadurch generierten Informationen für eine Mehrzahl von zu steuernden Systemen und/oder Komponenten des Kraftfahrzeugs herangezogen werden. Dadurch kann erreicht werden, dass lediglich eine Kamera 6 für die Generierung von Informationen, welche für eine Steuerung und/oder Regelung von mehreren Einheiten herangezogen und verwendet werden können, benötigt wird. Dadurch kann eine Kostenreduzierung und auch eine Reduzierung der Komponentenanzahl im Kraftfahrzeug erreicht werden. Beispielsweise kann die Kamera 6 derart angeordnet sein, dass durch sie auch eine Detektion der Fahrbahnbeschaffenheit oder der Fahrbahnbegrenzungen oder vorausfahrender und stehender Kraftfahrzeuge und/oder Objekte ermöglicht werden kann.

Im Ausführungsbeispiel wird ein Aktivieren der Heizdrähte 4 über die Steuereinheit 5 nur dann durchgeführt, wenn durch die Kamera 6 entsprechende Umgebungsbedingungen detektiert werden. Im Ausführungsbeispiel wird die Aktivierung der Heizdrähte 4 dann durchgeführt, wenn die Kamera 6 einen Schneefall detektiert. Darüber hinaus ist die im Ausführungsbeispiel erläuterte Ausführung derart ausgebildet, dass die Heizdrähte 4 nur dann aktiviert werden, wenn zusätzlich zur detektierten Schneefallssituation auch durch einen nicht dargestellten Temperaturfühler eine Außentemperatur im Bereich zwischen etwa -7° C und etwa +5° C detektiert wird.

Darüber hinaus kann vorgesehen sein, dass das Aktivieren der Heizdrähte 4 zusätzlich erst dann durchgeführt wird, wenn auch eine nicht dargestellte Scheibenwischervorrichtung aktiviert ist. Es kann auch vorgesehen sein, dass die Heizdrähte 4 unabhängig vom bildhaften Detektieren eines Schneefalls dann aktiviert werden, wenn eine Außentemperatur im Bereich zwischen etwa -7° C und etwa +5° C detektiert wird und zusätzlich die Scheibenwischervorrichtung aktiviert ist. Es kann dabei vorgesehen sein, dass der aktive Zustand der Scheibenwischervorrichtung durch die Kamera 6 bildhaft erfasst wird.

Mit der Erfindung wird somit erreicht, dass der zuverlässige und sichere Betrieb der Sensoranordnung dadurch eingestellt werden kann, dass ein Betreiben der Heizeinrichtung nur dann erfolgt, wenn vorgebbare Soll-Umgebungsbedingungen des Kraftfahrzeugs oder der Sensoranordnung eingetreten und durch die Kamera 6 bildhaft detektiert werden.

## Patentansprüche

1. Vorrichtung zum Betreiben einer Sensoranordnung (1), welche in einem Kraftfahrzeug angeordnet ist, wobei die Sensoranordnung (1) mit einer Abdeckung (3) zumindest teilweise abgedeckt ist, und wobei die Abdeckung (3) zumindest teildurchlässig für die von der Sensoranordnung (1) empfangbaren Signale ist, und mit einer Heizeinrichtung (4) zum Heizen der Abdeckung (3),
**gekennzeichnet durch**
eine bildverarbeitende Einheit (6), welche zur bildhaften Detektion von Umgebungsbedingungen des Kraftfahrzeugs ausgebildet ist, wobei die Heizeinrichtung (4) abhängig von den detektierbaren Umgebungsbedingungen der bildverarbeitenden Einheit (6) und dann, wenn eine Scheibenwischervorrichtung aktiviert ist, zum Heizen der Abdeckung (3) aktivierbar ist.

2. Vorrichtung nach Anspruch 1,
**dadurch gekennzeichnet, dass**
die Heizeinrichtung (4) dann zum Heizen der Abdeckung (3) aktivierbar ist, wenn die detektierbaren Umgebungsbedingungen vorgebbare Soll-Umgebungsbedingungen erreichen.

3. Vorrichtung nach Anspruch 1 oder 2,
**dadurch gekennzeichnet, dass**
die bildverarbeitende Einheit (6) zur bildhaften Detektion von winterlichen Umgebungsbedingungen, insbesondere Schneefall, ausgebildet ist.

4. Vorrichtung nach einem der vorhergehenden Ansprüche,
**dadurch gekennzeichnet, dass**
die Heizeinrichtung (4) zum Heizen der Abdeckung (3) dann aktivierbar ist, wenn zusätzlich eine detektierbare Umgebungstemperatur innerhalb eines vorgebbaren Temperaturintervalls liegt.

5. Vorrichtung nach einem der vorhergehenden Ansprüche,
**dadurch gekennzeichnet, dass**
die Abdeckung (3) zumindest teildurchlässig für Radar- und/oder Infrarot- und/oder Ultraschallsignale ausgebildet ist.

6. Vorrichtung nach einem der vorhergehenden Ansprüche,
**dadurch gekennzeichnet, dass**
die Heizeinrichtung als in die Abdeckung (3) integrierte Heizdrähte (4) oder als auf die Abdeckung (3) aufgebrachte Heizleiter oder als eine auf die Abdeckung (3) aufgebrachte Heizfolie ausgebildet ist.

7. Vorrichtung nach einem der vorhergehenden Ansprüche,
**dadurch gekennzeichnet, dass**
die Sensoranordnung (1) einem Gefahrenerkennungssystem oder einem Hilfesystem des Kraftfahrzeugs zugeordnet ist.

8. Verfahren zum Betreiben einer Sensoranordnung, welche in einem Kraftfahrzeug angeordnet ist, wobei die Sensoranordnung (1) mit einer Abdeckung (3) zumindest teilweise abgedeckt wird, und wobei die Abdeckung (3) zumindest teildurchlässig für die von der Sensoranordnung empfangbaren Signale ist, und einer mit Heizeinrichtung (4), mit welcher die Abdeckung (3) geheizt wird,
**dadurch gekennzeichnet, dass**
Umgebungsbedingungen des Kraftfahrzeugs mittels einer bildverarbeitenden Einheit (6) bildhaft detektiert werden und die Heizeinrichtung (4) abhängig von den detektierbaren Umgebungsbedingungen der bildverarbeitenden Einheit (6) und dann, wenn eine Scheibenwischervorrichtung aktiviert ist, zum Heizen der Abdeckung (3) aktiviert wird.

## Claims

1. A device for operating a sensor arrangement (1) installed in a motor vehicle, said sensor arrangement (1) being at least partly covered with a cover (3) and the cover (3) being at least partly permeable to the signals receivable by the sensor arrangement (1), and said device including a heating mechanism (4) for heating said cover (3),
**characterized by**
an image-processing unit (6) designed for graphic detection of the environmental conditions around the vehicle, in which case the heating mechanism (4) can be activated dependent upon the environmental conditions detectable by said image-processing unit (6) and then, when a windscreen wiper device is activated, can be activated for heating the cover (3).

2. A device according to Claim 1,
**characterized in that**
the heating mechanism (4) can be activated for heating the cover (3) when the detectable environmental conditions match preset specific environmental conditions.

3. A device according to Claim 1 or 2,
**characterized in that**
the image-processing unit (6) is designed for the graphic detection of wintry environmental conditions, in particular snowfall.

4. A device according to one of the preceding claims,
**characterized in that**
the heating mechanism (4) for heating the cover (3) can be activated when, in addition, a detectable ambient temperature falls within a preset temperature range.

5. A device according to one of the preceding claims,
**characterized in that**
the cover (3) is designed to be at least partly permeable to radar and/or infrared and/or ultrasound signals.

6. A device according to one of the preceding claims,
**characterized in that**
the heating mechanism takes the form of heating wires (4) integrated in the cover (3) or heating conductors mounted on the cover (3) or a heating foil applied onto the cover (3).

7. A device according to one of the preceding claims,
**characterized in that**
the sensor arrangement (1) is associated with a hazard-recognition system or an auxiliary system of the motor vehicle.

8. A method of operating a sensor arrangement installed in a motor vehicle, the sensor arrangement (1) being at least partly covered with a cover (3), and the cover (3) being at least partly permeable to the signals receivable by the sensor arrangement (1), including a heating mechanism (4), by which the cover (3) is heated,
**characterized in that**
environmental conditions around the vehicle are graphically detected by means of an image-processing unit (6) and the heating mechanism (4), dependent on the environmental conditions detectable by the image-processing unit (6), is activated for heating the cover (3) when a windscreen wiper device is activated.

## Revendications

1. Dispositif d'utilisation d'un ensemble de détection (1) qui est disposé dans un véhicule automobile, l'ensemble de détection (1) étant recouvert au moins en partie par un recouvrement (3) et le recouvrement (3) permettant, au moins partiellement, la transmission de signaux pouvant être reçus par l'ensemble de détection (1), et avec un dispositif de chauffage (4) pour le chauffage du recouvrement (3),
**caractérisé par**
une unité de traitement d'images(6) qui est réalisée pour la détection imagée des conditions environnementales du véhicule automobile, le dispositif de chauffage (4) pouvant être activé selon les conditions environnementales pouvant être détectées par l'unité de traitement d'images(6) traitant les images et si un dispositif essuie-glace est activé, pour le chauffage du recouvrement (3).

2. Dispositif selon la revendication 1,
**caractérisé en ce que**
le dispositif de chauffage (4) peut être activé pour le chauffage du recouvrement (3) si les conditions environnementales pouvant être détectées atteignent des conditions environnementales prédéfinies de consigne.

3. Dispositif selon la revendication 1 ou 2,
**caractérisé en ce que**
l'unité de traitement d'images(6), est réalisée pour la détection imagée de conditions environnementales hivernales, en particulier de chute de neige.

4. Dispositif selon l'une des revendications 1 à 3,
**caractérisé en ce que**
le dispositif de chauffage (4) peut être activé pour le chauffage du recouvrement (3) si en outre, une température environnementale pouvant être détectée se trouve dans un intervalle de température prédéfinie.

5. Dispositif selon l'une des revendications 1 à 4,
**caractérisé en ce que**
le recouvrement (3) est réalisé pour permettre au moins partiellement la transmission de signaux radar et/ou infrarouges et/ou à ultrasons.

6. Dispositif selon l'une des revendications 1 à 5,
**caractérisé en ce que**
le dispositif de chauffage est réalisé comme des fils de chauffage (4) intégrés dans le recouvrement (3)
ou comme des conducteurs chauffants appliqués sur le recouvrement (3) ou comme un film chauffant appliqué sur le recouvrement (3).

7. Dispositif selon l'une des revendications 1 à 6,
**caractérisé en ce que**
l'ensemble de détection (1) est associé à un système de détection des dangers ou un système d'assistance du véhicule automobile.

8. Procédé d'utilisation d'un ensemble de détection qui est disposé dans un véhicule automobile, l'ensemble de détection (1) étant recouvert au moins en partie par un recouvrement (3) et le recouvrement (3) permettant au moins partiellement la transmission de signaux pouvant être reçus par le dispositif de détection et avec un dispositif de chauffage (4), avec lequel le recouvrement (3) est chauffé,
**caractérisé en ce que**
des conditions environnementales du véhicule automobile sont détectées de manière imagée au moyen d'une unité de traitement d'images(6) traitant les images et le dispositif de chauffage (4) est activé selon les conditions environnementales pouvant être détectées par l'unité de traitement d'images(6) et si un dispositif essuie-glace est activé, pour le chauffage du recouvrement (3).
